Europäisches Patentamt

European Patent Office

Office européen des brevets

(11) Veröffentlichungsnummer: **0 298 509 B1**

(19)

(12) **EUROPÄISCHE PATENTSCHRIFT**

(45) Veröffentlichungstag der Patentschrift: 02.10.91

(51) Int. Cl.⁵: **B23Q 1/08**, F16C 35/06

(21) Anmeldenummer: 88110965.6

(22) Anmeldetag: 08.07.88

(54) Lageranordnung für die Arbeitsspindel einer Werkzeugmaschine.

(30) Priorität: 08.07.87 DE 3722572

(43) Veröffentlichungstag der Anmeldung:
11.01.89 Patentblatt 89/02

(45) Bekanntmachung des Hinweises auf die
Patenterteilung:
02.10.91 Patentblatt 91/40

(84) Benannte Vertragsstaaten:
CH DE FR GB LI SE

(56) Entgegenhaltungen:
DE-A- 2 907 483    DE-C- 490 972
DE-C- 977 572    FR-A- 679 737
SU-A- 456 707    US-A- 2 012 677
US-A- 2 626 842

MICROTECNIC, Band 9, Nr. 4, Juli 1955, Seiten 199-205, Agifa Verlag, Zürich, CH; T.E.
ROUNDS: "Superprecision ball bearings,
their selection and application in machines"

WERKSTATT UND BETRIEB, Band 106, Nr. 2,
Februar 1973, Seiten 117-123, C. Hanser Verlag, München, DE; H. PITTROFF:
"Werkzeugmaschinenspindeln"
(73) Patentinhaber: **Boehringer Werkzeugmaschinen GmbH
Stuttgarter Strasse 50 Postfach 220
W-7320 Göppingen(DE)**

(72) Erfinder: **Kuhn, Siegfried, Ing.-grad.
Gammelshauserstrasse 8
W-7321 Dürnau(DE)**
Erfinder: **Philipp, Bernhard, Dipl.-Ing.
Körnerstrasse 3/1
W-7332 Eislingen(DE)**
Erfinder: **Schulten, Hermann
Brückenstrasse 46
W-7321 Birenbach(DE)**

(74) Vertreter: **Vogeser, Werner, Dipl.-Ing. et al
Patentanwälte Hansmann & Vogeser Albert-
Rosshaupter-Strasse 65
W-8000 München 70(DE)**

WERKSTATTSTECHNIK, Band 64, Oktober
1974, Seiten 598-603, Springer Verlag, Berlin,
DE; H. PITTROFF: "Gestaltungsrichtlinien für
Werkzeugmaschinenspindeln"

WERKSTATT UND BETRIEB, Band 111, Nr. 4,
April 1978, Seiten 234-236, C. Hanser Verlag,
München, DE; W. HÖRNING et al.:
"Lagerungen für Werkzeugmaschinenspindeln"

## Beschreibung

Die Erfindung betrifft eine Lageranordnung entsprechend dem Oberbegriff des Anspruchs 1.

Es ist bekannt, die Arbeitsspindel z.B. einer Drehmaschine im Bereich der Spindelnase in Wälzlagern mit Kugel-Zylinderrollen, in Wälzlagern mit Kegelrollen, in Gleitlagern, in hydrostatischen Lagern oder in hydrodynamischen Lagern zu lagern. Übliche Schrägkugellager werden vom Hersteller mit verschiedenen radialen Vorspannungen geliefert. Normalerweise verwendet man Lager mit geringer Vorspannung. Um bei doppelreihigen Zylinderlagern mit kegeliger Bohrung hinsichtlich der im Einsatz erforderlichen Vorspannung optimale Verhältnisse zu erzielen, ist es weiterhin bekannt, den Kegel auf der Hauptspindel in der Steigung positiv auszubilden, um den Zylinderrollenreihen eine unterschiedliche Vorspannung zu verleihen. Dies erfordert jedoch eine entsprechende Ausbildung der Lagerbohrung.

Der Grund, weshalb man bestimmte Vorspannungsverhältnisse anstrebt, ist die Tatsache, daß der wirksame Kragarm der Spindel, d.h. der Hebelarm, der an einem bestimmten Lager angreift und für die Durchbiegung der Spindel maßgebend ist, möglichst kurz und möglichst definiert sein sollte.

So zeigt die US-A-2,626,842 eine Tandem-O-Lagerung mit Kugellagern, bei der mittels bestimmter Übertragungselemente die Last gleichmäßig auf die beiden Lager verteilt wird. Dies ergibt jedoch nicht den kürzest möglichen freien Kragarm.

Bei einer üblichen Arbeitsspindellagerung mit gleich großen Schrägkugellagern in Tandem-O-Anordnung ist dieser Kragarm häufig nicht exakt zu definieren, da man nicht gewährleisten kann, daß das äußere Lager die größte Vorspannung und damit auch die größte Steifigkeit hat. Dieser Kragarm, der bei der Berechnung der Steifigkeit mit der dritten Potenz eingeht, kann sich bei nicht ausreichend definierter Vorspannung der einzelnen Lager bis in das mittlere Lager erstrecken, was sich auf Leistung und Genauigkeit der gesamten Lageranordnung nachteilig auswirkt. Dieser Nachteil tritt vor allem dann auf, wenn das zu bearbeitende Werkstück ohne zusätzliche Abstützung nur in einem Spannfutter aufgenommen wird.

Um einen möglichst kurzen Kragarm zu erzielen, ist es bereits bekannt (De-PS 32 33 914), den Boden eines am Spindelflansch zu befestigenden Spannfutters in diesen Flansch zu integrieren und dadurch den wirksamen Kragarm zu verkürzen. Durch diese bekannte Maßnahme lassen sich jedoch die Verhältnisse der Lageranordnung nicht verbessern.

Der Erfindung liegt die Aufgabe zugrunde, die Lageranordnung der eingangs genannten Art so auszubilden, daß der wirksame Kragarm möglichst kurz und seine Länge möglichst definiert ist und unter Belastung annähernd konstant bleibt.

Gelöst wird diese Aufgabe gemäß der Erfindung durch die im Anspruch 1 angegebenen Merkmale. Zweckmäßige Ausgestaltungen der Erfindung ergeben sich aus den Unteransprüchen.

Durch den größeren Durchmesser der Arbeitsspindel im Bereich des äußeren Lagers erhält dieses Lager eine größere Vorspannung als die anderen Lager. Hierdurch erreicht man, daß sich der Kragarm, der die Steifigkeit der Spindel entscheidend mitbestimmt, nur bis etwa zur Mitte dieses äußeren Lagers erstreckt. Durch entsprechende Dimensionierung kann man erreichen, daß diese optimale Länge des Kragarms auch unter den üblichen Belastungen konstant bleibt und sich damit die Betriebsbedingungen genau definieren lassen. Da es bei Lageranordnungen der eingangs genannten Art erforderlich ist, hinsichtlich der Vorspannung eine ausgeglichene Konstruktion zu erzielen, strebt man an, das äußere und das innere Lager mit etwa der gleichen Vorspannung zu beaufschlagen, während das mittlere Lager vorspannungsfrei sein soll. Dies kann dadurch erreicht werden, daß zwischen dem mittleren und dem äußeren Lager ein Distanzstück eingesetzt wird, das aus einem äußeren Ring und einem dazu konzentrischen inneren Ring besteht, der eine geringere Breite als der äußere Ring hat. Bei Verwendung eines solchen Distanzstückes kann erreicht werden, daß die geringere Vorspannung, die das mittlere Lager im nicht eingebauten Zustand hat, kompensiert wird.

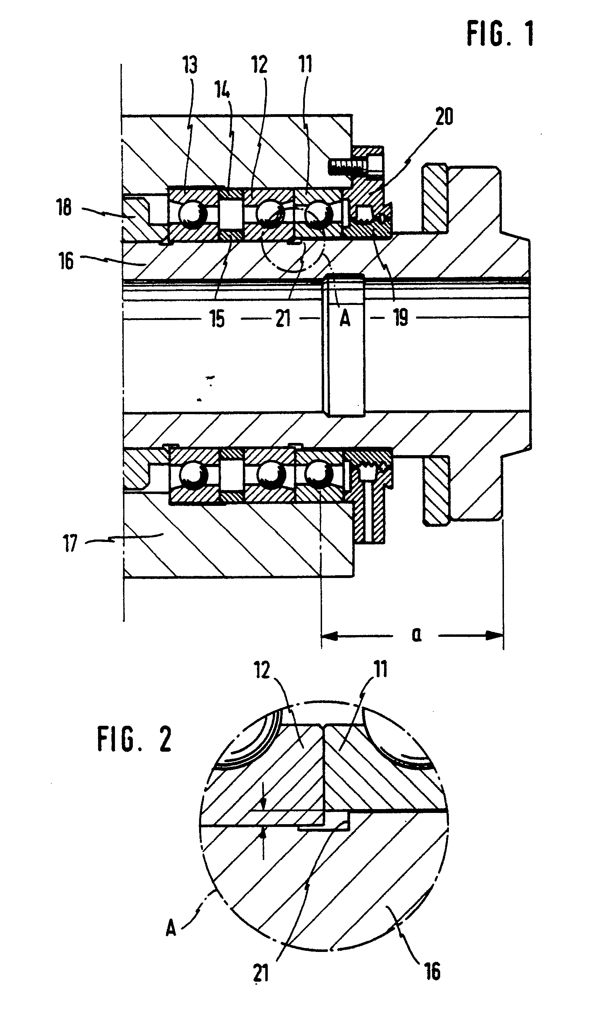

Die Erfindung wird nachstehend anhand der Fig. 1 und 2 beispielsweise erläutert. Es zeigt

Fig. 1 einen Axialschnitt einer Arbeitsspindel einer Drehmaschine im Bereich der Spindelnase, und

Fig. 2 einen vergrößerten Ausschnitt aus Fig. 1.

Bei der Lageranordnung gemäß der Erfindung handelt es sich um eine Anordnung mit Schrägkugellagern in Tandem-O-Anordnung mit einem äußeren Lager 11 und einem mittleren Lager 12, die beide um den gleichen Winkel geneigte Wirkungslinien haben, und mit einem inneren Lager 13 mit entgegengesetzt geneigter Wirkungslinie. Die Lager 11 bis 13 sind in der Bohrung des Maschinengehäuses 17 einer Drehmaschine angeordnet und sitzen auf deren Arbeitsspindel 16.

Wie Fig. 2 zeigt, hat die Spindel 16 im Bereich des äußeren Lagers 11 eine Stufe 21 und damit einen größeren Durchmesser als im Bereich des mittleren Lagers 12 und des inneren Lagers 13. Aufgrund des größeren Durchmessers ist das äußere Lager 11 stärker vorgespannt als die übrigen Lager, so daß der Kragarm, der in Fig. 1 mit a bezeichnet ist, eine genau definierte Länge hat und nur bis etwa in die Mitte dieses Lagers reicht, während sich bei nicht ausreichend großer Vorspannung des äußeren Lagers 11, d.h. bei einer größeren Vorspannung z.B. des mittleren Lagers 12, der Kragarm a bis zum mittleren Lager 12 erstrecken kann.

Der Abschnitt der Spindel 16, der einen größeren Durchmesser aufweist, erstreckt sich über den Bereich des äußeren Lagers 11 hinaus. Außerhalb des äußeren Lagers 11 befindet sich eine Labyrinthdichtung 19. Weiterhin ist die Lageranordnung nach außen durch einen Abdeckring 20 gesichert, der am Maschinengehäuse 17 durch Schrauben befestigt ist. Der Abschnitt der Spindel 16, der einen größeren Durchmesser aufweist, ist zur Verdeutlichung mit einer verstärkten Linie wiedergegeben.

Um eine vorspannungsmäßig ausgeglichene Lageranordnung zu erreichen, ist zwischen das mittlere Lager 12 und das innere Lager 13 ein Distanzstück eingesetzt, das aus einem äußeren Ring 14 und einem dazu konzentrischen inneren Ring 15 besteht, der eine geringere Breite als der äußere Ring hat. Durch ein so ausgebildetes Distanzstück erreicht man, daß das äußere Lager 11 und das innere Lager 13 mit etwa der gleichen Vorspannung beaufschlagt werden, während das mittlere Lager 12 vorspannungsfrei ist. Die Lageranordnung wird in axialer Richtung durch einen üblichen Zweistufen-Preßverband vorgespannt.

## Patentansprüche

1.  Lageranordnung für die Arbeitsspindel (16) einer Werkzeugmaschine, z.B. einer Drehmaschine, bestehend aus Schrägkugellagern (11, 12, 13) in Tandem-O-Anordnung mit einem inneren (13), einem mittleren (12) und einem äußeren (11) Kugellager, wobei mittleres (12) und äußeres (11) Kugellager parallele Wirkungslinien haben,
    **dadurch gekennzeichnet, daß**
    die Arbeitsspindel (16) im Bereich des äußeren Kugellagers (11) einen größeren Durchmesser als im Bereich der übrigen Kugellager (12, 13) aufweist und daß es sich bei dem mittleren (12) und dem äußeren (11) Kugellager um die gleichen Schrägkugellager handelt.

2.  Lageranordnung nach Anspruch 1,
    **dadurch gekennzeichnet, daß**
    die Arbeitsspindel (16) am Übergang zwischen dem mittleren Kugellager (12) und dem äußeren Kugellager (11) eine Stufe (21) aufweist, deren Schulter unter dem Lagerring des äußeren Kugellagers (11) liegt.

3.  Lageranordnung nach Anspruch 1 oder 2,
    **dadurch gekennzeichnet, daß**

sich der Abschnitt der Arbeitsspindel (16), der den größeren Durchmesser aufweist, über den Bereich des äußeren Kugellagers (11) hinaus erstreckt.

4.  Lageranordnung nach einem der Ansprüche 1 bis 3,
    **gekennzeichnet durch**
    ein Distanzstück zwischen dem inneren Kugellager (13) und dem mittleren Kugellager (12), welches aus einem äußeren Ring (14) und einem dazu konzentrischen inneren Ring (15) besteht, der eine geringere Breite als der äußere Ring (14) hat.

## Claims

1.  Bearing arrangement for the operating spindle (16) of a machine tool, e.g. a lathe, consisting of angular-contact ball bearings (11, 12, 13) in tandem-O-configuration, with an inner (13), a central (12) and an outer (11) ball bearing, the central (12) and the outer (11) ball bearing having parallel lines of action, characterised by the fact that the operating spindle (16) has a greater diameter in the zone of the outer ball bearing (11) than in the zone of the remaining ball bearings (12, 13) and that the central (12) and the outer (11) ball bearing are the same angular contact ball bearings.

2.  Bearing arrangement in accordance with claim 1, characterised by the fact that the operating spindle (16) is provided, at the transition between the central ball bearing (12) and the outer ball bearing (11), with a step (21) of which the shoulder is situated underneath the bearing ring of the outer ball bearing (11).

3.  Bearing arrangement in accordance with claim 1 or 2, characterised by the fact that the section of the operating spindle (16) which has the greater diameter extends beyond the zone of the outer ball bearing (11).

4.  Bearing arrangement in accordance with one of claims 1 to 3, characterised by the fact that, between the inner ball bearing (13) and the central ball bearing (12), a separator is provided which consists of an outer ring (14) and an inner ring (15) which is concentric therewith and of which the width is smaller than that of the outer ring.

## Revendications

1.  Agencement de palier, pour la broche de travail (16) d'une machine-outil, par exemple d'un tour, composé de roulements à billes à contact oblique (11,12,13) disposés en tandem-O, avec un roulement à billes intérieur (13), un roulement à billes central (12) et un roulement à billes extérieur (11), où les roulements à billes central (12) et extérieur (11) présentent des lignes d'action parallèles, caractérisé en ce que la broche de travail (16) présente, dans la zone du roulement à billes extérieur (11) un diamètre supérieur au diamètre dans la zone des autres roulements à billes (12,13) et les roulements à billes central (12) et extérieur (11) étant des roulements à billes à contact oblique identiques.

2. Agencement de palier selon la revendication 1, caractérisé en ce que la broche de travail (16) présente, à la transition entre le roulement à billes central (12) et le roulement à billes extérieur (11), un étagement dont l'épaulement est situé sous la bague de roulement du roulement à billes extérieur (11).

3. Agencement de palier selon la revendication 1 ou 2, caractérisé en ce que la section de la broche de travail (16) qui présente un grand diamètre s'étend sur la zone du roulement à billes extérieur (11).

4. Agencement de palier selon l'une des revendications 1 à 3, caractérisé par une pièce d'espacement, située entre le roulement à billes intérieur (13) et le roulement à billes central (12), qui se compose d'une bague extérieure (14) et d'une bague intérieure (15) lui étant concentrique, de largeur inférieure à celle de la bague extérieure (14).

FIG. 1

FIG. 2